# EUROPEAN PATENT APPLICATION

(11) **EP 4 714 514 A1**
(43) Date of publication of application: **25.03.2026**
(21) Application number: 24876170.2
(22) Date of filing: 23.07.2024
(51) Int. Cl.: A63F 13/34

(54) **BLOCKCHAIN RESOURCE PROCESSING METHOD AND APPARATUS, ELECTRONIC DEVICE, STORAGE MEDIUM, AND PROGRAM PRODUCT**

(30) Priority: 09.10.2023 CN 202311307275
(71) Applicant: Tencent Technology (Shenzhen) Company Limited, Shenzhen, Guangdong 518057 (CN)
(72) Inventor: LIAO, Zhiyong, Shenzhen, Guangdong 518057 (CN); WANG, Zongyou, Shenzhen, Guangdong 518057 (CN); SHI, Yifang, Shenzhen, Guangdong 518057 (CN); ZHU, Gengliang, Shenzhen, Guangdong 518057 (CN); LIU, Qucheng, Shenzhen, Guangdong 518057 (CN); LIU, Hanqing, Shenzhen, Guangdong 518057 (CN); HUANG, Yangjun, Shenzhen, Guangdong 518057 (CN); NIE, Kaixuan, Shenzhen, Guangdong 518057 (CN)
(74) Representative: AWA Sweden AB
(86) International application number: PCT/CN2024/106935
(87) International publication number: WO 2025/077350

(57) **Abstract**

Provided in the present application are a blockchain resource processing method and apparatus, an electronic device, a storage medium, and a program product. The blockchain resource processing method comprises: in response to a deployment request by a first object for a target resource packet, deploying the target resource packet in an overall contract; receiving a binding request by the first object for a plurality of target resources to be bound which are in the target resource packet, wherein for each target resource to be bound, a second owner in a sub-contract corresponding to the target resource to be bound is already registered as the first object; in response to the binding request, transferring the second owner from being the first object to being the address of the overall contract, so as to determine the target resources to be bound as bound target resources; and, in response to an ownership transfer request by a second object for the bound target resources, transferring a first owner of the bound target resources to be the second object.

## Description

### RELATED APPLICATION

This application claims priority to Chinese Patent Application No. 202311307275.5, filed with the China National Intellectual Property Administration on October 9, 2023 and entitled "METHOD FOR PROCESSING BLOCKCHAIN RESOURCES, RELATED APPARATUS, AND MEDIUM".

### FIELD OF THE TECHNOLOGY

Embodiments of this application relates to the blockchain field, and in particular, to a method for processing blockchain resources and apparatus, an electronic device, a storage medium, and a program product.

### BACKGROUND OF THE DISCLOSURE

Currently, a blockchain network is often configured for resource scheduling and transfer. With development of blockchains, a same resource may be scheduled and transferred on a plurality of application platforms (for example, game platforms). For example, an armor in a game may be simultaneously configured for game A, game B, game C, and the like, and may be obtained in game A, game B, game C, and the like, and transferred to other objects in game A, game B, game C, and the like. There is usually a requirement of collectively transferring resources collected on different application platforms. For example, armors separately collected in game A, game B, and game C are transferred to another object together as one set.

However, one resource in the resource set often needs to be independently transferred and scheduled on an application platform on which the resource is obtained. Thus, transfer and scheduling efficiency is low, and interoperability across the application platforms is low.

### SUMMARY

Embodiments of this application provide a method for processing blockchain resources and apparatus, an electronic device, a storage medium, and a program product, to improve resource transfer and scheduling efficiency, and improve interoperability across application platforms.

An embodiment of this application provides a method for processing blockchain resources, executable by an electronic device, the electronic device being connected to a plurality of application platforms, and maintaining, on a blockchain, a sub-contract configured for each of the plurality of application platforms and a master contract configured for the plurality of application platforms; and the method comprising:
deploying, in response to a deployment request of a first object for a resource package, the resource package in the master contract, the resource package comprising a plurality of resources on the plurality of application platforms, and a first owner of each of the plurality of resources in the master contract being the first object;
receiving a binding request of the first object for a first resource to be bound in the resource package, a second owner of the first resource in a first sub-contract corresponding to an application platform of the first resource being registered as the first object;
determining, by changing the second owner in the first sub-contract from the first object to a master contract address in response to the binding request, the first resource as a bound resource; and
changing, in response to an ownership transfer request of a second object for the bound resource, the first owner of the bound resource in the master contract from the first object to the second object.

In addition, an embodiment of this application provides an apparatus for processing blockchain resources, the apparatus being connected to a plurality of application platforms, and maintaining, on a blockchain, a sub-contract configured for each of the plurality of application platforms and a master contract configured for the plurality of application platforms; and the apparatus comprising:
a resource deployment unit, configured to deploy, in response to a deployment request of a first object for a resource package, the resource package in the master contract, the resource package comprising a plurality of resources on the plurality of application platforms, and a first owner of each of the plurality of resources in the master contract being the first object;
a first receiving unit, configured to receive a binding request of the first object for a first resource to be bound in the resource package, a second owner of the first resource in a first sub-contract corresponding to an application platform of the first resource being registered as the first object;
a resource binding unit, configured to determine, by changing the second owner in the first sub-contract from the first object to a master contract address in response to the binding request, the first resource as a bound resource; and
a first change execution unit, configured to change, in response to an ownership transfer request of a second object for the bound resource, the first owner of the bound resource in the master contract from the first object to the second object.

In addition, an embodiment of this application provides an electronic device, including a memory and a processor, the memory having a computer program stored therein, and the processor, when executing the computer program, implementing the method for processing blockchain resources described above.

In addition, an embodiment of this application provides a computer-readable storage medium, the storage medium having a computer program stored therein, and the computer program, when executed by a processor, implementing the method for processing blockchain resources described above.

In addition, an embodiment of this application provides a computer program product, including a computer program, and the computer program being read and executed by a processor of a computer device, to enable the computer device to perform the method for processing blockchain resources described above.

### BRIEF DESCRIPTION OF THE DRAWINGS

The accompanying drawings are configured for providing a further understanding of technical solutions of this application, constitute a part of the specification, are configured for explaining the technical solutions of this application in combination with embodiments of this application, and do not constitute a limitation on the technical solutions of this application.
FIG. 1 is a schematic diagram of a system architecture in which a blockchain node is connected to an application platform and to which an embodiment of this application is applied.
FIG. 2A to FIG. 2G are schematic diagrams of one type of service scenarios of a method for processing blockchain resources according to embodiments of this application.
FIG. 3 is a flowchart of a method for processing blockchain resources according to an embodiment of this application.
FIG. 4 is a flowchart of a specific implementation of operation 310 in FIG. 3.
FIG. 5 is a flowchart of determining that a plurality of first resources are included within an initial resource list according to another embodiment of this application.
FIG. 6 is a flowchart of a specific implementation of operation 520 in FIG. 5.
FIG. 7 is a schematic diagram of a specific implementation of determining that a first resource is included within the initial resource list in FIG. 6.
FIG. 8 is a flowchart of another specific implementation of operation 620 in FIG. 6.
FIG. 9 is a schematic diagram of a specific implementation of determining that a first resource is included within an initial resource list based on a second variable in FIG. 8.
FIG. 10 is a flowchart of a specific implementation of operation 330 in FIG. 3.
FIG. 11A to FIG. 11C are schematic diagrams of specific implementations of binding a resource based on a type of a second sub-contract address in FIG. 10.
FIG. 12 is a flowchart of processing a unbinding request according to another embodiment of this application.
FIG. 13 is a flowchart of determining that a plurality of second resources are included within an initial resource list according to another embodiment of this application.
FIG. 14 is a flowchart of processing a quantity of second resources according to another embodiment of this application.
FIG. 15 is a schematic diagram of a specific implementation of unbinding a resource from a bound resource based on a second variable in FIG. 14.
FIG. 16 is a flowchart of processing a second resource according to another embodiment of this application.
FIG. 17 is a flowchart of a specific implementation of operation 1430 in FIG. 14.
FIG. 18 is a flowchart of transmitting an initial resource list according to another embodiment of this application.
FIG. 19 is a module diagram of an apparatus for processing blockchain resources according to an embodiment of this application.
FIG. 20 is a structural diagram of a terminal according to an embodiment of this application.
FIG. 21 is a structural diagram of a server according to an embodiment of this application.

### DESCRIPTION OF EMBODIMENTS

To make the objectives, technical solutions, and advantages of this application clearer, the following further describes this application in detail with reference to the accompanying drawings and embodiments. The specific embodiments described herein are merely configured for explaining this application but are not intended to limit this application.

In the embodiments of this application, when relevant processing needs to be performed based on data related to characteristics of a target object, such as attribute information or an attribute information set of the target object, permission or consent of the target object is first obtained, and collection, use, and processing of such data all comply with relevant laws, regulations, and standards. In addition, when the attribute information of the target object needs to be obtained in the embodiments of this application, individual permission or individual consent of the target object is obtained by popping up a window, jumping to a confirmation page, or the like. After the individual permission or individual consent of the target object is explicitly obtained, relevant data of the target object that is necessary for ensuring normal operation of the embodiments of this application is obtained.

Before the embodiments of this application are further described in detail, nouns and terms in the embodiments of this application are described, and the nouns and terms in the embodiments of this application are applicable to the following explanations.

A blockchain is a new application mode of computer technologies such as distributed data storage, a consensus mechanism, and an encryption algorithm. The blockchain is essentially a decentralized database, and is a string of data blocks generated in a cryptographic manner. Each data block includes information about a batch of transactions, which is configured for verifying validity (anti-counterfeiting) of the information and associating with a previous block.

A blockchain node, a node of a blockchain, generally refers to a computer in a blockchain network, or any computer connected to the blockchain network is referred to as a node. Generally, the blockchain node has three features: First, the node has storage space, and can store block data in a device such as a removable hard disk and a computer. Second, the node is connected to the network, and all devices with storage space need be connected to the network. Third, the node participates in the blockchain, needs to run a corresponding blockchain program in the storage space, and executes an on-chain transaction via a visual terminal.

A virtual resource is an information resource edited by using a database and a program. On an application platform, specific data processing may be performed on the virtual resource according to some data protocol standards. In different service scenarios, types of non-homogeneous virtual resources can also be diverse. For example, the non-homogeneous virtual resource may be a virtual painting, a virtual equipment, or a virtual resource of another type.

A service contract refers to a section of code written on the blockchain. Once a term in the service contract is triggered for execution on the blockchain at a time point, the code is to run automatically. The service contract is a computer protocol aimed at propagating, verifying, or executing a transaction in an information-based manner. The service contract is in a digital form, and is written into computer-readable code. Once participants of the service contract reach an agreement, rights and obligations established based on the service contract are to be executed by a computer or a computer network through the code on the blockchain.

Currently, a blockchain network is often configured for resource scheduling and transfer. With development of blockchains, a same resource may be scheduled and transferred on a plurality of application platforms (for example, game platforms). For example, an armor in a game may be simultaneously configured for a game A, a game B, a game C, and the like, and may be obtained in the game A, the game B, the game C, and the like, and transferred to other objects in the game A, the game B, the game C, and the like.

During actual application, there is usually a requirement of collectively transferring resources collected on different application platforms. For example, armors separately collected in the game A, the game B, and the game C are transferred to another object together as one set.

Data protocol standards followed by different application platforms may be different. The armor in the game is used as a non-homogeneous virtual equipment. Data forms of the same armor stored in different application platforms are also different. In this case, due to limitations of the related art, each resource in the resource set needs to be transferred and scheduled separately on an application platform on which the resource is obtained. However, the resources in the resource set cannot be transferred or scheduled as a whole. Consequently, resource transfer and scheduling efficiency is low, and interoperability across the application platforms is low.

A system architecture and scenarios to which the embodiments of this application are applied are described below.

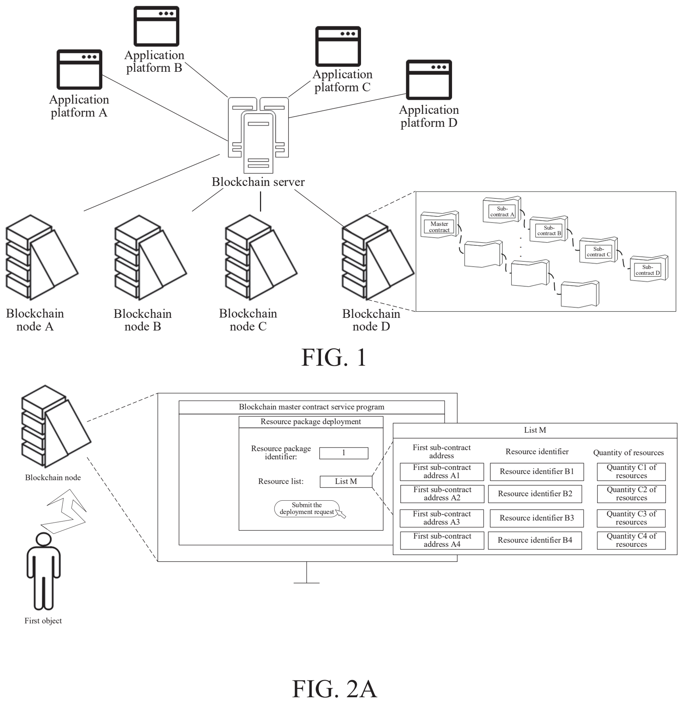

A blockchain resource transfer processing network shown in FIG. 1 includes:
an application platform A, an application platform B, an application platform C, and an application platform D, which are four types of application platforms. The application platform in this embodiment of this application refers to a network platform that bears a blockchain application.

A blockchain node A, a blockchain node B, a blockchain node C, and a blockchain node D are all nodes on a blockchain. In this embodiment of this application, the blockchain node has three features:
First, the node has storage space, and can store block data in a device such as a removable hard disk and a computer.
Second, the node is connected to a network, and all devices with storage space need be connected to the network.
Third, the node participates in running the blockchain, can run a corresponding blockchain program in the storage space, and executes an on-chain transaction via a visual terminal.

In this embodiment of this application, the blockchain node A, the blockchain node B, the blockchain node C, and the blockchain node D maintain, on the blockchain, a plurality of sub-contracts corresponding to a plurality of application platforms and a master contract configured for the plurality of application platforms.

In a service scenario shown in FIG. 1, a sub-contract A corresponding to the application platform A, a sub-contract B corresponding to the application platform B, a sub-contract C corresponding to the application platform C, and a sub-contract D corresponding to the application platform D are stored in different blocks of the same blockchain. a master contract, different from the sub-contracts, of the application platform A, the application platform B, the application platform C, and the application platform D is stored in another blockchain.

FIG. 1 shows a blockchain resource transfer processing network according to an embodiment of this application. Storage of a contract in a blockchain is not limited to FIG. 1. To be specific, the plurality of sub-contracts corresponding to the plurality of application platforms are not necessarily stored in the same blockchain, and the sub-contracts and the master contract are not necessarily stored in different blockchains.

A blockchain server refers to a server configured to allocate to-be-chained data to a corresponding blockchain node and control each blockchain node to maintain a blockchain. The blockchain node is connected to the application platform via the blockchain server.

The embodiments of this application may be applied to a plurality of scenarios, such as scenarios, shown in FIG. 2A to FIG. 2G, in which virtual resources of an application platform A and an application platform B are transferred as a whole. In all embodiments of this application, a sub-contract refers to a service contract for storing at least one virtual resource in an application platform. For example, a sub-contract A is a service contract for storing a virtual resource in the application platform A, and a sub-contract B is a service contract for storing a virtual resource in the application platform B. To transfer the virtual resources on the application platform A and the application platform B as a whole from a first object to a second object, this application provides the embodiments shown in FIG. 2A to FIG. 2G.

Refer to FIG. 2A. To facilitate collectively transferring and scheduling the resources, the first object delivers a deployment request to a blockchain node, aiming to integrate resources collected on different application platforms into a resource package. The resource package is deployed in a master contract on a blockchain, and a first owner of the resource package is set as the first object. In this way, first owners of all resources in the resource package are all the first object. In all embodiments of this application, a master contract refers to a service contract for storing virtual resources in a plurality of application platforms.

The deployment request may include a resource package identifier and a resource list. The resource package identifier is configured for distinguishing between different resource packages, and the resource list is configured for recording resource storage statuses of the first object on different application platforms.

In FIG. 2A, a resource package identifier, corresponding to a resource package, being 1 may indicate that a numbering of a currently deployed resource package is 1, a resource list corresponding to the resource package 1 is a list M, and the list M records resource storage statuses of each resource of the first object in the resource package on the different application platforms.

Resource identifiers are configured for distinguishing between different resources of the first object in the resource package. A first sub-contract address indicates a storage address of a resource stored in a corresponding application platform, and a quantity of resources indicates a quantity of resources stored at the first sub-contract address.

In the list M, a quantity of resources that correspond to a resource identifier B1 and that are stored at a first sub-contract address A1 is C1, a quantity of resources that correspond to a resource identifier B2 and that are stored at a first sub-contract address A2 is C2, a quantity of resources that correspond to a resource identifier B3 and that are stored at a first sub-contract address A3 is C3, and a quantity of resources that correspond to a resource identifier B4 and that are stored at a first sub-contract address A4 is C4.

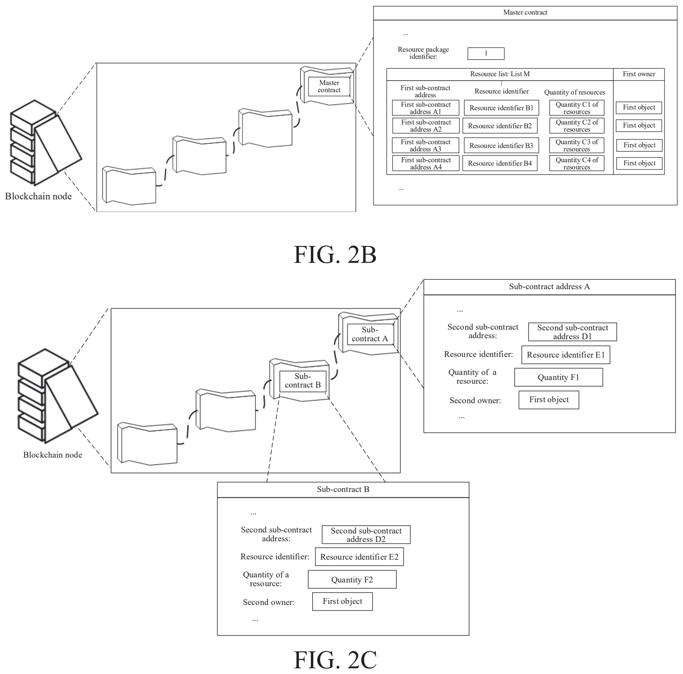

FIG. 2B shows a contract section in the master contract after the resource package 1 is deployed. After the first object delivers the deployment request of the resource package 1 to the blockchain node, a deployed resource package is stored in the master contract. Because the resource corresponding to the resource identifier B1, the resource corresponding to the resource identifier B2, the resource corresponding to the resource identifier B3, and the resource corresponding to the resource identifier B4 are all deployed by the first object, first owners of the resources in the master contract are all registered as the first object.

FIG. 2C shows a contract section of the sub-contract A before the sub-contract A of the application platform A is bound to the master contract, and a contract section of the sub-contract B before the sub-contract B of the application platform B is bound to the master contract.

Before the sub-contract A of the application platform A is bound to the master contract, the contract section of the sub-contract A records a second sub-contract address D1, a resource identifier E1, and a quantity F1 of resources that are of the sub-contract A, and records a second owner of the resource corresponding to the resource identifier E1 in the sub-contract A as the first object.

Before the sub-contract B of the application platform B is bound to the master contract, the contract section of the sub-contract B records a second sub-contract address D2, a resource identifier E2, and a quantity F2 of resources that are of the sub-contract B, and records a second owner of the resource corresponding to the resource identifier E2 in the sub-contract B as the first object.

For the resource corresponding to the resource identifier E1, a quantity of resources of the first object on the application platform A is F1, and these resources are stored at the second sub-contract address D1. For the resource corresponding to the resource identifier E2, a quantity of resources of the first object on the application platform B is F2, and these resources are stored at the second sub-contract address D2.

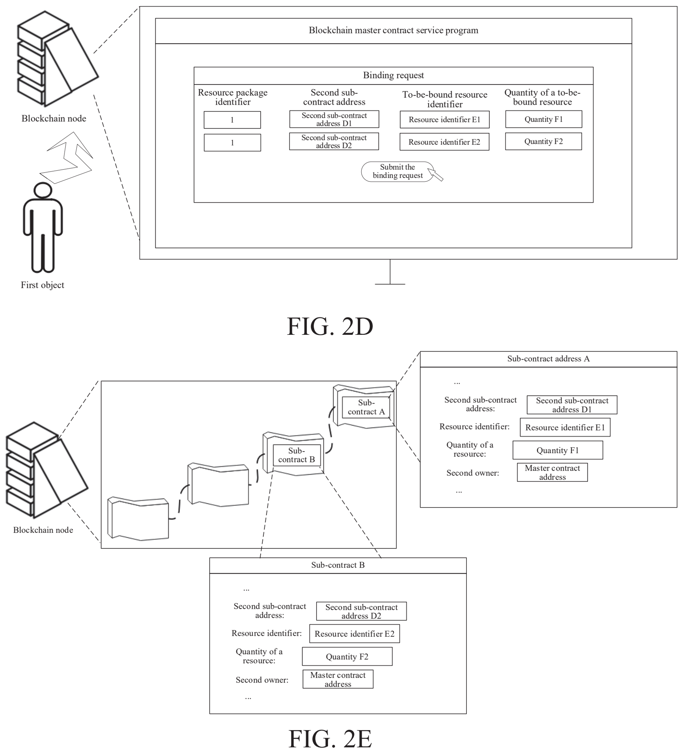

Refer to FIG. 2D. If a part or all of the resources in the resource package are expected to be collectively scheduled or transferred, the first object needs to deliver a binding request for a plurality of resources, and invoke sub-contracts on the blockchain, so that second owners of the first resources to be collectively scheduled or transferred in the sub-contracts are all changed to a master contract address. In this way, the first resource may be determined as a resource bound to the master contract.

In FIG. 2D, the first resources targeted by the binding request include the resource corresponding to the resource identifier E1 and the resource corresponding to the resource identifier E2. The resource corresponding to the resource identifier E1 is collected in the resource package 1 and is stored at the second sub-contract address D1, and a storage quantity is the quantity F1. The resource corresponding to the resource identifier E2 is collected in the resource package 1 and is stored at the second sub-contract address D2, and a storage quantity is the quantity F2.

Refer to FIG. 2E. After the binding request in FIG. 2D is delivered, resource ownership transfer functions in the sub-contracts on the blockchain are invoked, so that the second owners of the first resources to be collectively scheduled or transferred in the sub-contracts are all changed to the master contract address, to determine the first resources as the bound resources.

It may be determined with reference to FIG. 2C that the resource corresponding to the resource identifier E1 is stored in the sub-contract A, and a quantity of the resource E1 is F1; and the resource corresponding to the resource identifier E2 is stored in the sub-contract B, and a quantity of the resource E2 is F2.

In view of this, FIG. 2E shows that after the binding request is delivered, the second owners of the first resources in the sub-contracts are all changed to the master contract address. To be specific, for the resource corresponding to the resource identifier E1 in the sub-contract A, a second owner of the resource E1 is changed from the first object to the master contract address. In addition, for the resource corresponding to the resource identifier E2 in the sub-contract B, a second owner of the resource E2 is changed from the first object to the master contract address.

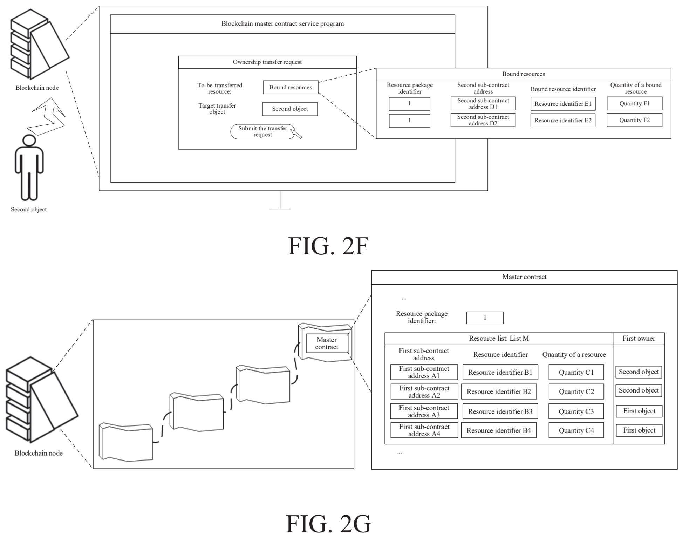

Refer to FIG. 2F. To collectively schedule or transfer bound resources, the second object needs to deliver an ownership transfer request for the bound resource, to change a first owner of the bound resource to the second object. Previously determined bound resources, namely, the resource corresponding to the resource identifier E1 and the resource corresponding to the resource identifier E2, are filled in a "to-be-transferred resource" field in the ownership transfer request. The second object is filled in a "target transfer object" field in the ownership transfer request, to collectively schedule or transfer the bound resources to the second object.

Refer to FIG. 2G. in a contract section of the master contract, the first owner of the bound resource is changed to the second object. According to the contract section of the master contract, a bound resource corresponding to the resource identifier E1 is collected in the resource package 1. It may be determined, based on the list M of the resource package 1, that the resource identifier E1 corresponding to the bound resource is equal to the resource identifier B1, the second sub-contract address D1 of the bound resource is equal to the first sub-contract address A1, and the corresponding quantity F1 is equal to the quantity C1. Therefore, the first owner of the resource corresponding to the resource identifier B1 in the master contract needs to be changed to the second object.

Similarly, a bound resource corresponding to the resource identifier E2 is collected in the resource package 1. It may be determined, based on the list M of the resource package 1, that the resource identifier E2 corresponding to the bound resource is equal to the resource identifier B2, the second sub-contract address D2 of the bound resource is equal to the first sub-contract address A2, and the corresponding quantity F2 is equal to the quantity C2. Therefore, the first owner of the resource corresponding to the resource identifier B2 in the master contract needs to be changed to the second object.

In a normal case, an owner of a resource may be determined based on a second owner in a sub-contract. However, if the second owner becomes the master contract address, the owner of the resource needs to be determined, by searching, based on the master contract address, for a first owner to which the resource belongs in the master contract. The second owners of the bound resources are all changed to the master contract address.

Therefore, once the ownership transfer request of the resource package is received, the first owners of the resource package corresponding to the bound resources are all changed to a transmitter of the transfer request, so that the resources can be collectively transferred and scheduled without performing complex changes on the application platforms. This improves resource transfer and scheduling efficiency and interoperability across the application platforms.

It is to be emphasized that the embodiments of this application may be applied to various scenarios. FIG. 2A to FIG. 2G show one type of service scenarios of the embodiments of this application. Service scenarios to which the method for processing blockchain resources in the embodiments of this application may be applied may include, but are not limited to, the specific embodiments listed above.

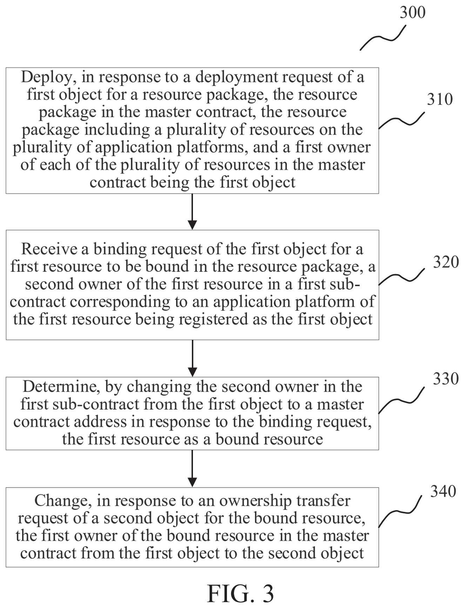

Refer to FIG. 3. A method for processing blockchain resources according to an embodiment of this application is performed by an electronic device. The electronic device corresponds to a blockchain node. The blockchain node is connected to a plurality of application platforms, and maintains, on a blockchain, a sub-contract configured for each application platform and a master contract configured for the plurality of application platform. The method for processing blockchain resources may include, but is not limited to, the following operation 310 to operation 340.

Operation 310: Deploy, in response to a deployment request of a first object for a resource package, the resource package in the master contract, the resource package including a plurality of resources on the plurality of application platforms, and a first owner of each of the plurality of resources in the master contract being the first object.

Operation 320: Receive a binding request of the first object for a first resource to be bound in the resource package, a second owner of the first resource in a first sub-contract corresponding to an application platform of the first resource being registered as the first object.

Operation 330: Determine, by changing the second owner in the first sub-contract from the first object to a master contract address in response to the binding request, the first resource as a bound resource.

Operation 340: Change, in response to an ownership transfer request of a second object for the bound resource, the first owner of the bound resource in the master contract from the first object to the second object.

In operation 310, the deployment request for the resource package aims to integrate resources collected on different application platforms into the resource package and deploy the resource package in the master contract. An objective of the operation is to integrate the resources of the first object on the different application platforms, to collectively transfer and schedule the collected resources.

In this embodiment of this application, in a process of integrating the resources collected on the different application platforms into the resource package, a first owner is configured for each resource in the master contract. When a resource is uploaded by the first object, a first owner of the resource may be registered as the first object. When a resource is scheduled or transferred from the first object to the second object, a first owner of the resource may be changed from the first object to the second object.

According to some embodiments provided in this application, in operation 330, a resource ownership transfer function in the sub-contract on the blockchain is invoked, to change the second owner of the first resource in the sub-contract to the master contract address. Before this operation, the method for processing blockchain resources may further include, but is not limited to, the following operations:
invoking authorization functions in a plurality of sub-contracts; and
executing the authorization functions to authorize the master contract to access the sub-contracts, so as to determine the master contract address as the second owner registered on the application platform corresponding to the sub-contract.

In this way, the master contract is authorized by using the authorization function in the sub-contract, so that the master contract has permission to invoke the resource ownership transfer function in the sub-contract on the blockchain in a subsequent operation, and the master contract address can serve as the second owner registered on the application platform corresponding to the sub-contract. In this way, adding an authorization barrier helps improve security of the method for processing blockchain resources in this application. In addition, the master contract address can serve as the second owner registered on the application platform corresponding to the sub-contract. This helps facilitate more flexible scheduling and transfer of resources.

In operation 320, to collectively schedule or transfer resources of the plurality of application platforms, first resources of the plurality of application platforms need to be bound first.

In all embodiments of this application, a first resource corresponds to a virtual equipment, and the quantity of the first resource may be 1 or more than 1. When the quantity is more than 1, multiple first resources correspond to a virtual equipment. In this embodiment of this application, collective scheduling or transfer of the resources is initiated by the first object, and the first object may control a resource belonging to the first object. Therefore, second owners of the plurality of first resources that need to be collectively scheduled or transferred in the sub-contracts are already registered as the first object.

In operation 330, the resource ownership transfer function is configured in the sub-contract, to adjust a resource ownership right on the sub-contract. Therefore, to bind the first resources of the plurality of application platforms, resource ownership transfer functions in the sub-contracts on the blockchain need to be invoked, so that the second owners of the first resources in the sub-contracts are changed to the master contract address.

In this way, the second owner of the first resource is specifically determined in the master contract based on the master contract address, to determine the first resource as a bound resource. Based on this, an operation is performed on the master contract, so that second owners of bound resources on the different application platforms can be changed at one time, to complete scheduling and transfer of the bound resources.

In operation 340, after the first resource is determined as the bound resource, to transfer the bound resource, the first owner configured for the bound resource needs to be changed to the second object in the resource package.

In this way, the bound resources on the different application platforms may be linked to a first owner of the master contract based on the master contract address, to transfer ownership of the bound resources on the different application platforms to the second object, so that the resources are collectively transferred and scheduled.

According to this embodiment of this application shown in operation 310 to operation 340, to facilitate collectively transferring and scheduling the resources, the first object integrates the resources collected on the different application platforms into the resource package. The resource package is deployed in the master contract on the blockchain, and the first owner of the resource package is set as the first object. If a part or all of the resources in the resource package are expected to be collectively scheduled or transferred, the sub-contracts on the blockchain are invoked, so that second owners of the first resources to be collectively scheduled or transferred in the sub-contracts are all changed to the master contract address. In this way, the first resource may be determined as the resource bound to the master contract.

In a normal case, an owner of a resource may be determined based on a second owner in a sub-contract. However, if the second owner becomes the master contract address, the first owner to which the resource belongs in the master contract needs to be searched for based on the master contract address. Second owners of bound resources are all changed to the master contract address. Therefore, once the ownership transfer request of the resource package is received, first owners of the resource package corresponding to the bound resources are all changed to a transmitter of the transfer request, so that the resources can be collectively transferred and scheduled without performing complex changes on the application platforms. This improves resource transfer and scheduling efficiency and interoperability across the application platforms.

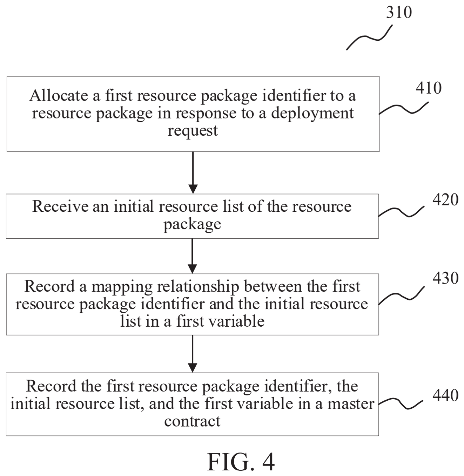

Refer to FIG. 4. In some embodiments of this application, operation 310 may include, but is not limited to, the following operation 410 to operation 440.

Operation 410: Allocate a first resource package identifier to a resource package in response to a deployment request.

Operation 420: Receive an initial resource list of the resource package.

Operation 430: Record a mapping relationship between the first resource package identifier and the initial resource list in a first variable.

Operation 440: Record the first resource package identifier, the initial resource list, and the first variable in a master contract.

In operation 410, the deployment request for the resource package aims to integrate resources collected on different application platforms into the resource package and deploy the resource package in the master contract. An objective of the operation is to integrate the resources of a first object on the different application platforms, to collectively transfer and schedule the collected resources.

To distinguish between different resource packages, resource package identifiers need to be allocated to the resource packages. The resource package identifiers have various types, and may be identifier numbers of the resource packages, or may be identifier character strings of the resource packages.

In operation 420, a resource list is configured for recording resource storage statuses of the first object on the different application platforms. The initial resource list is a resource list formed after the resources collected on the different application platforms are integrated into the resource package, and records a quantity of resources of the first object registered for the first time on the different application platforms, namely, a registered quantity of resources.

In some embodiments, for a resource, the resource list may record a resource identifier matching the resource, a first sub-contract address of the resource, and a quantity of the resource. Resource identifiers are configured for distinguishing between different resources in the resource package. The first sub-contract address is a storage address of the resource stored in a sub-contract, and the quantity of resources is a quantity of resources stored at the first sub-contract address.

The resource list may record various types of content, which may include, but are not limited to, the specific embodiments listed above.

In some embodiments, after operation 420, the method for processing blockchain resources may further include, but is not limited to: determining that a first sub-contract address corresponding to an initial resource is of a first type, the first type indicating that the initial resource is unreproducible; and verifying that a registered quantity of the initial resource is 1.

The type of the sub-contract address may be the first type. The first type indicates that the initial resource is unreproducible. Therefore, to ensure that the registered quantity of the initial resource matches the first type, it needs to verify that the registered quantity of the initial resource is 1. In this way, before the binding request for a first resource is received in 320, it may be first determined that the registered quantity of the initial resource matches the first type, and then an unqualified initial resource may be screened out, to reduce occurrence of invalid resource binding processes. This helps improve accuracy and efficiency of resource binding.

In operation 430 and operation 440, after the initial resource list of the resource package is received, the mapping relationship between the resource package identifier and the initial resource list needs to be recorded in the first variable. Based on this, because the first variable records the mapping relationship between the resource package identifier and the initial resource list, the resource package identifier, the initial resource list, and the first variable are recorded in the master contract on a blockchain. This can facilitate subsequent scheduling and transfer of the resource in the resource package.

Specific operations of deploying the resource package in the master contract on the blockchain are described through operation 410 to operation 440 in this embodiment of this application. In a process of deploying the resource package in the master contract on the blockchain, the resource package identifier, the initial resource list, and the first variable are recorded in the master contract on the blockchain. This can facilitate subsequent scheduling and transfer of the resource in the resource package.

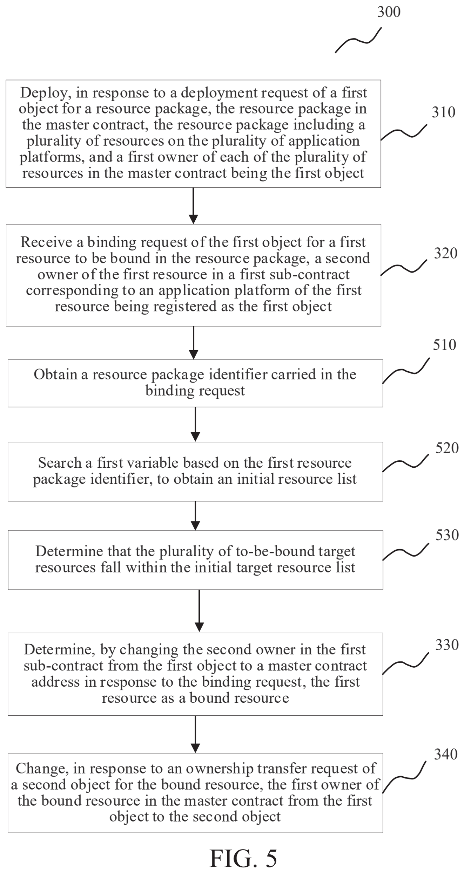

Refer to FIG. 5. After the binding request for the plurality of first resources is received in operation 320 and before the second owner is changed from the first object to the master contract address in operation 330, the method for processing blockchain resources may further include, but is not limited to, the following operation 510 to operation 530.

Operation 510: Obtain a resource package identifier carried in the binding request.

Operation 520: Search a first variable based on the first resource package identifier, to obtain an initial resource list.

Operation 530: Determine that the first resource is included within the initial resource list.

In operation 510, a first resource package identifier of a to-be-bound resource, i.e., the first resource, is configured in the binding request. Based on this, the resource package identifier carried in the binding request needs to be obtained, to determine a search index for searching for a corresponding initial resource list.

In some embodiments, before the resource package identifier carried in the binding request is obtained, the method for processing blockchain resources may further include: obtaining a first transmitter of the binding request, and determining the first transmitter as the first object.

Because an object delivering the binding request and an object deploying the resource package may not be the same object, when it is determined that the resource package is deployed by the first object, the first transmitter of the binding request may be obtained, the first transmitter is determined as the first object, and then a subsequent operation is performed. In this way, security of the method for processing blockchain resources in this application can be further improved.

In operation 520, in a process of deploying the resource package, the resource package identifier, the initial resource list, and the first variable are recorded in the master contract on a blockchain, and a mapping relationship between the resource package identifier and the initial resource list is recorded in the first variable. Therefore, based on the resource package identifier, the master contract is searched for the first variable, to obtain the initial resource list matching the resource package identifier.

Then, in operation 530, it may be determined that, the plurality of first resources may be found in the initial resource list of the resource package in the master contract.

Resources collected by the first object on different application platforms are integrated into a resource package and deployed in the master contract. Based on this, the plurality of first resources needing to be bound are included within the initial resource list. This means that these first resources needing to be bound may be found in the resource package deployed in the master contract.

According to this embodiment of this application shown in operation 510 to operation 530, before a resource ownership transfer function in a sub-contract on the blockchain is invoked, it is first determined that the plurality of first resources are included within the initial resource list, to ensure that the resource that needs to be bound can be found in the master contract. Based on this, a second owner of the first resource in the sub-contract is subsequently changed to the master contract address. This helps improve accuracy and efficiency of resource binding.

In some embodiments, when the first resource is not included within the initial resource list, corresponding error information may be generated based on this case, and is fed back to the first object.

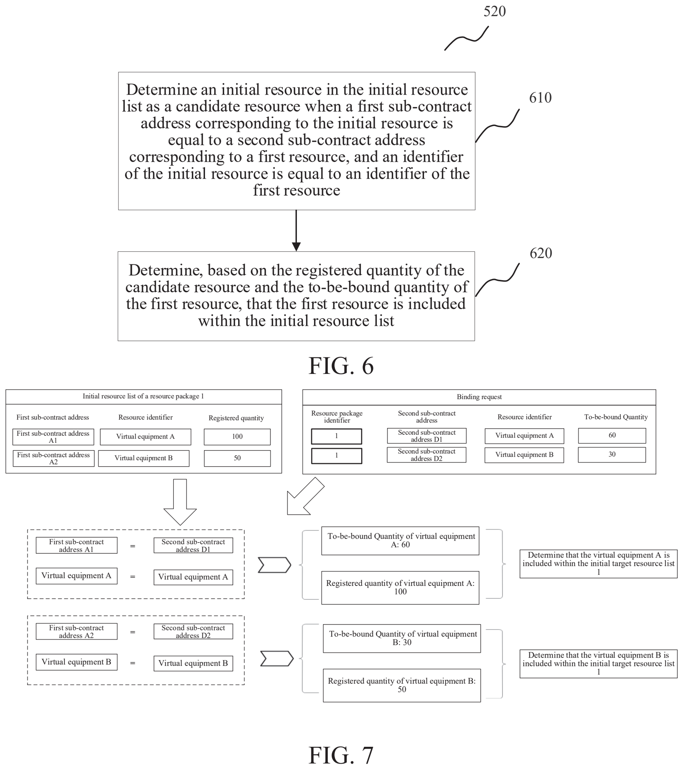

Refer to FIG. 6. An initial resource list includes information about a plurality of initial resources, and information about each initial resource includes: a first sub-contract address corresponding to an application platform on which the respective initial resource is registered, an identifier of the respective initial resource, and a registered quantity of the respective initial resource on the application platform.

A binding request includes information about a plurality of first resources, and information about each first resource includes: a second sub-contract address corresponding to an application platform on which the respective first resource is registered, an identifier of the respective first resource, and a to-be-bound quantity of the respective first resource.

Operation 530 may include, but is not limited to, the following operation 610 and operation 620.

Operation 610: Determine an initial resource in the initial resource list as a candidate resource when a first sub-contract address corresponding to the initial resource is equal to a second sub-contract address corresponding to a first resource, and an identifier of the initial resource is equal to an identifier of the first resource.

Operation 620: Determine, based on the registered quantity of the candidate resource and the to-be-bound quantity of the first resource, that the first resource is included within the initial resource list.

In the initial resource list, for each initial resource, the first sub-contract address corresponding to the application platform on which the initial resource is registered and the identifier of the initial resource are recorded. In the binding request, for each first resource, the second sub-contract address corresponding to the application platform on which the first resource is registered and the identifier of the first resource are recorded. In this case, in operation 610, if a first sub-contract address corresponding to an initial resource in the initial resource list is equal to a second sub-contract address corresponding to a first resource, and an identifier of the initial resource is equal to an identifier of the first resource, it means that the first resource is included in the initial resource list. Therefore, the initial resource may be determined as the candidate resource.

In operation 620, when the registered quantity of the candidate resource is greater than or equal to the to-be-bound quantity of the first resource, it may be determined that all the first resources in terms of the to-be-bound quantity are included within the initial resource list. If the registered quantity of the candidate resource is less than the to-be-bound quantity of the first resource, it may be determined that a part of the to-be-bound quantity of the first resources are included within the initial resource list.

There are various embodiments for determining, based on the quantity of registered candidate resources and the quantity of first resources, that the first resources are included within the initial resource list. These embodiments may include, but are not limited to, the specific embodiments listed above.

According to this embodiment of this application shown in operation 610 and operation 620, it is determined, based on the first sub-contract address, the identifier of the initial resource, the registered quantity of the candidate resource, the second sub-contract address, the identifier of the first resource, and the to-be-bound quantity of the first resource, that the first resource is included within the initial resource list. This helps improve accuracy and efficiency of resource binding.

Refer to FIG. 7. FIG. 7 shows an example embodiment of determining that first resources are included within an initial resource list. A binding request for the first resources includes:
a second sub-contract address D1 corresponding to an application platform on which a first resource is registered, an identifier E1 (for example, a virtual equipment A) of the first resource, and a quantity F1 (60) of the first resource E1; and
a second sub-contract address D2 corresponding to an application platform on which a first resource is registered, an identifier E2 (for example, a virtual equipment B) of the first resource, and a quantity F2 (30) of the first resource E2.

In this embodiment of this application, because a resource package identifier corresponding to the binding request is 1, a first variable is searched based on the resource package identifier 1, to obtain an initial resource list of the resource package 1.

A first sub-contract address A1 corresponding to an initial resource in the initial resource list is equal to the second sub-contract address D1 corresponding to the first resource, and an identifier B1 (the virtual equipment A) of the initial resource is equal to the identifier E1 (the virtual equipment A) of the first resource. In this case, the corresponding initial resource may be determined as an candidate resource.

It may be determined that a registered quantity C1 (100) of the initial resource corresponding to the identifier B1 (the virtual equipment A) is greater than the to-be-bound quantity F1 (60) of the first resource corresponding to the identifier E1 (the virtual equipment A), and it may be determined that the first resource corresponding to the identifier E1 (the virtual equipment A) is included within the initial resource list of the resource package 1.

Similarly, a first sub-contract address A2 corresponding to an initial resource in the initial resource list is equal to the second sub-contract address D2 corresponding to the first resource and an identifier B2 (the virtual equipment B) of the initial resource is equal to the identifier E2 (the virtual equipment B) of the first resource. In this case, the corresponding initial resource may be determined as an candidate resource.

It may be determined that a registered quantity C2 (50) of the initial resource corresponding to the identifier B2 (the virtual equipment B) is greater than the to-be-bound quantity F2 (30) of the first resource corresponding to the identifier E2 (the virtual equipment B), and it may be determined that the first resource corresponding to the identifier E2 (the virtual equipment B) is included within the initial resource list of the resource package 1.

FIG. 7 shows an embodiment of determining that the first resources are included within the initial resource list. Determining that the first resources are included within the initial resource list may include a plurality of embodiments, and is not limited to the foregoing examples.

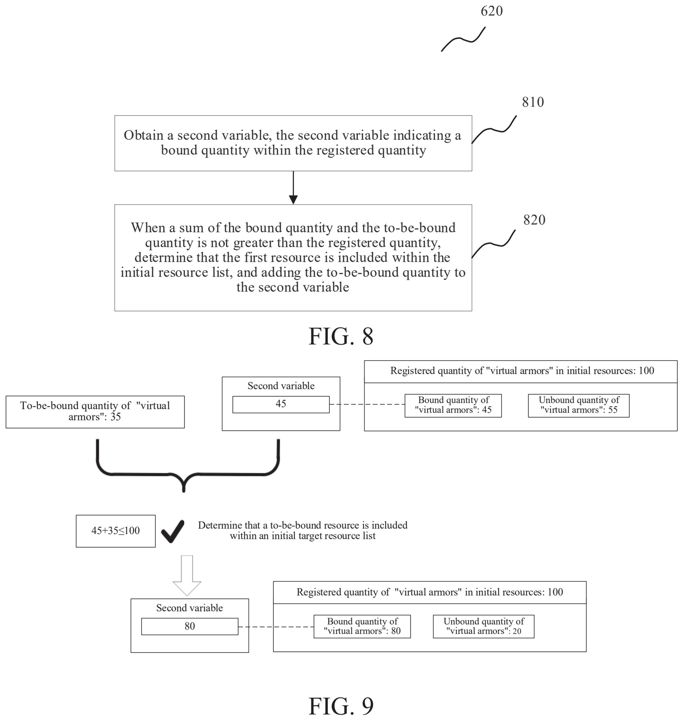

Refer to FIG. 8. Operation 620 may include, but is not limited to, the following operation 810 and operation 820.

Operation 810: Obtain a second variable, the second variable indicating a bound quantity within the registered quantity.

Operation 820: When a sum of the bound quantity and the to-be-bound quantity is not greater than the registered quantity, determine that the first resource is included within the initial resource list, and adding the to-be-bound quantity to the second variable.

The bound quantity of the first resource refers to a quantity of binding the first resource before binding in this round. Therefore, after the second variable is obtained, it may be determined whether a sum of the bound quantity and the to-be-bound quantity is greater than the registered quantity.

If a sum of the bound quantity and the to-be-bound quantity is not greater than the registered quantity, it means that a quantity for the resources that are not bound within the registered quantity can support a binding request for the to-be-bound quantity. In this case, it may be determined that the first resource is included within the initial resource list, and the to-be-bound quantity is added to the second variable.

Adding the to-be-bound quantity to the second variable specifically means adding the to-be-bound quantity to the bound quantity in the second variable, to update the bound quantity in the registered quantity.

In this way, according to this embodiment of this application shown in operation 810 and operation 820, in a process of determining that the first resources are included within the initial resource list, it may be first determined that the unbound quantity is greater than the bound quantity, to reduce occurrence of invalid resource binding processes. This helps improve accuracy and efficiency of resource binding.

FIG. 9 shows an embodiment of determining that first resource is included within an initial resource list. In FIG. 9, whether a "virtual armor" is included within the initial resource list needs to be determined. For this purpose, a second variable is obtained. A corresponding registered quantity of "virtual armors" in initial resources is 100, a bound quantity of "virtual armors" is 45, and a unbound quantity of "virtual armors" is 55. Therefore, the second variable indicates that the bound quantity is 45.

Based on this, a to-be-bound quantity of "virtual armors" is 35, and a sum of the bound quantity 45 and the to-be-bound quantity 35 is 80, which is less than the registered quantity 100 of "virtual armors". Therefore, it may be determined that the first resource is included within the initial resource list.

In this way, in a process of determining that the first resource is included within the initial resource list, it may be first determined that a unbound quantity is greater than a bound quantity, to reduce occurrence of invalid resource binding processes. This helps improve accuracy and efficiency of resource binding.

In addition, adding the to-be-bound quantity to the second variable specifically means adding the to-be-bound quantity 35 to the bound quantity 45 in the second variable, and updating the bound quantity of "virtual armors" indicated in the second variable to 80.

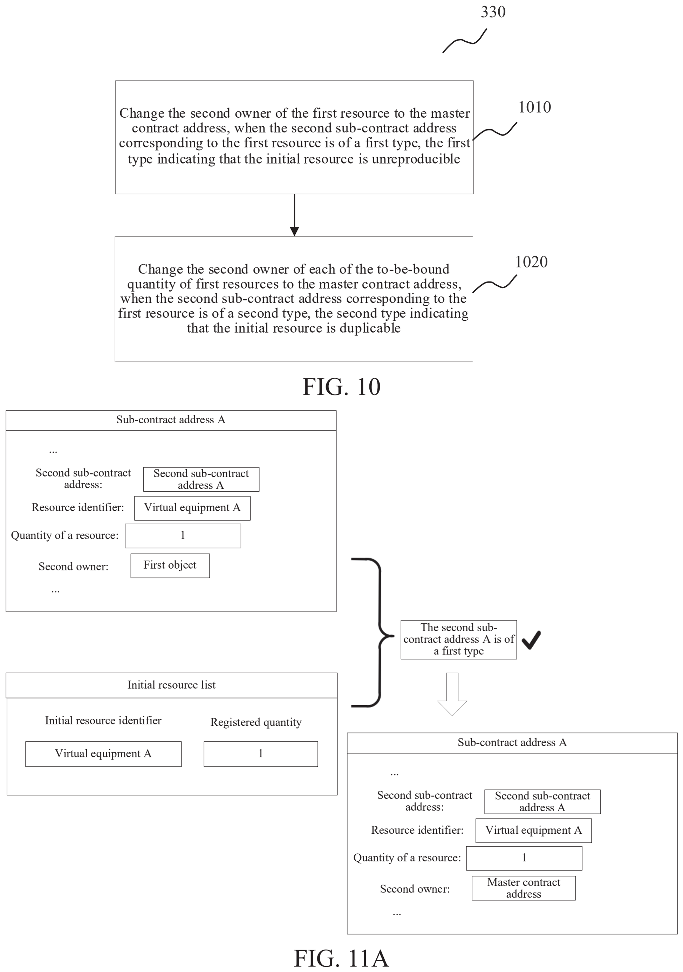

Refer to FIG. 10. For each first resource, operation 330 may include, but is not limited to, the following operation 1010 and operation 1020.

Operation 1010: Change the second owner of the first resource to the master contract address, when the second sub-contract address corresponding to the first resource is of a first type, the first type indicating that the initial resource is unreproducible.

Operation 1020: Change the second owner of each of the to-be-bound quantity of first resources to the master contract address, when the second sub-contract address corresponding to the first resource is of a second type, the second type indicating that the initial resource is duplicable.

An application platform in this embodiment of this application refers to a network platform carrying a blockchain application, and a sub-contract refers to a service contract for storing virtual resources in the application platform. On the application platform, specific data processing may be performed on the virtual resources according to some data protocol standards, making these virtual resources unique and irreplaceable. According to different data protocol standards, types of specific data processing performed on the virtual resources also vary.

Therefore, based on differences between data protocol standards followed by different sub-contracts, the sub-contract address may be of the first type or the second type. In an initial resource list, the first type indicates that the initial resource is unreproducible, and the second type indicates that the initial resource is duplicable.

In operation 1010, the first type indicates that the initial resource is unreproducible, which means that a quantity of the initial resource of the first type is limited to 1 or 0. In this case, the second owner of the first resource is directly changed to the master contract address, so that the resource binding can be completed.

In operation 1020, the second type indicates that the initial resource is duplicable, which means that a quantity of the initial resource of the second type is not limited to 1. In this case, the quantity of multiple first resources is determined, and then each of the second owners of the multiple first resources is changed to the master contract address, so that the resources binding can be completed.

According to this embodiment of this application shown in operation 1010 and operation 1020, based on the type of the second sub-contract address, the second owners of the multiple first resources are changed to the master contract address. In this way, differences between data protocol standards of different application platforms can be flexibly dealt with.

Even if a part of a plurality of application platforms that store virtual resources are of the first type and a part of the application platforms are of the second type, and it is difficult to integrate the virtual resources stored in these different platforms, according to this embodiment of this application shown in operation 1010 and operation 1020, the second owners of the first resources are changed to the master contract address based on the type of the second sub-contract address, the sub-contract is bound to the master contract, and a second owner of the sub-contract is linked to a first owner of the master contract, so that an operation of scheduling or transferring resources at one time by changing the first owner of the master contract is subsequently implemented. In this way, it is unnecessary to perform complex changes on the application platforms. This improves resource transfer and scheduling efficiency and interoperability across the application platforms.

Refer to FIG. 11A. Before a resource is bound, a virtual equipment A of a first type is stored in a sub-contract A corresponding to a second sub-contract address A. Because the first type indicates that an initial resource is unreproducible, a quantity of the first resource corresponding to the virtual equipment A can only be 1, as shown in an initial resource list.

A second owner of the virtual equipment A is registered as a first object in the sub-contract A. The second sub-contract address A of the virtual equipment A is of the first type, and the first type indicates that the virtual equipment A is unreproducible. Therefore, the second owner of the virtual equipment A may be changed to an address of a master contract.

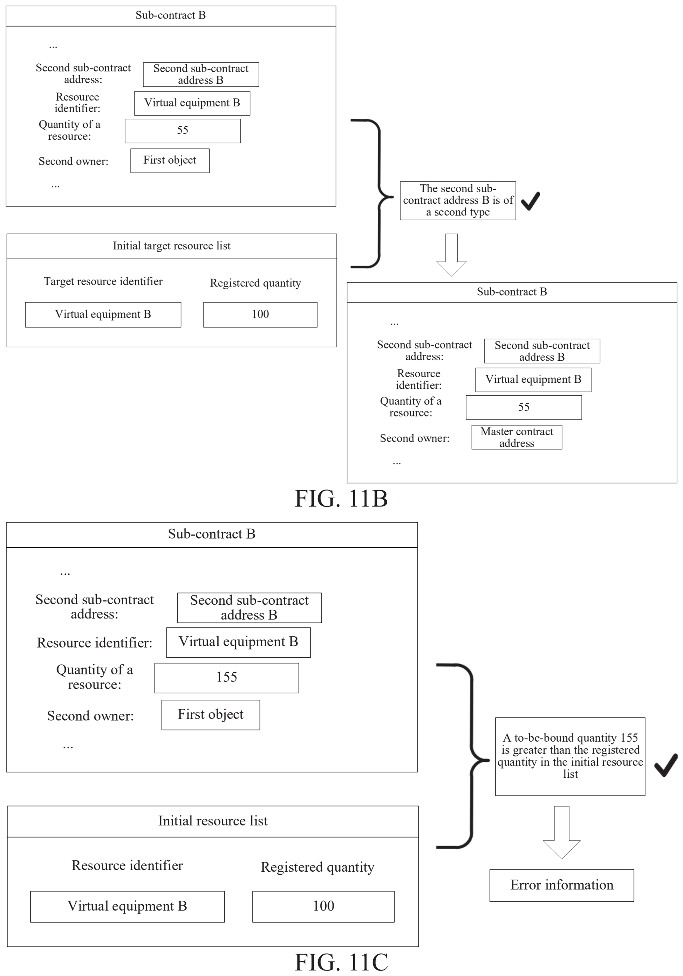

Refer to FIG. 11B. A virtual equipment B of a second type is stored in a sub-contract B corresponding to a second sub-contract address B. Because the second type indicates that an initial resource is duplicable, a quantity of multiple first resources corresponding to the virtual equipment B is not limited to 1. In the embodiment in FIG. 11B, the quantity of first resources corresponding to the virtual equipment B is 55. Second owners of the 55 first resources of the virtual equipment B are all registered as a first object in the sub-contract B. The second sub-contract address B of the virtual equipment B is of the second type, and the second type indicates that the virtual equipment B is duplicable. Therefore, the second owners of the 55 first resources of the virtual equipment B may be all changed to the master contract address.

Refer to FIG. 11C. A virtual equipment B of a second type is stored in a sub-contract B corresponding to a second sub-contract address B. Because an initial resource of the second type is duplicable, a quantity of first resources corresponding to the virtual equipment B is not limited to 1. In the embodiment in FIG. 11B, the quantity of first resources corresponding to the virtual equipment B is 155. It may be learned that the quantity 155 of first resources is greater than a quantity 100 of registered resources in an initial resource list. In this case, corresponding error information is generated, and is fed back to a first object.

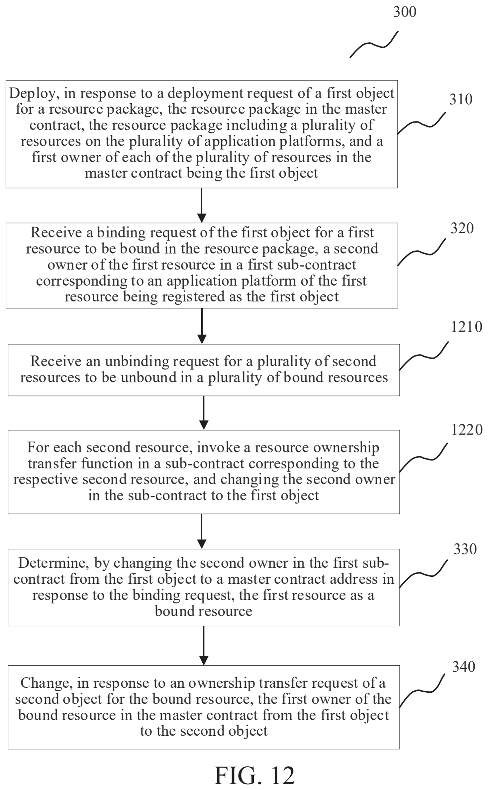

Refer to FIG. 12. After operation 330, the method for processing blockchain resources in this application may further include, but is not limited to, the following operation 1210 and operation 1220.

Operation 1210: Receive an unbinding request for a plurality of second resources to be unbound in a plurality of bound resources.

Operation 1220: For each second resource, invoke a resource ownership transfer function in a sub-contract corresponding to the respective second resource, and changing the second owner in the sub-contract to the first object.

In this embodiment of this application, in a process of determining a first resource as a bound resource, there may be cases such as a binding error and a binding solution needing to be adjusted. Therefore, after a batch of resources are bound, a part or all of the resources may be unbound, thereby improving flexibility of resource scheduling or transfer.

In this embodiment of this application, the resource ownership transfer function is configured in the sub-contract, to adjust a resource ownership right on the sub-contract. When the cases such as the binding error and the binding solution needing to be adjusted occur, a part or all of the plurality of bound resources need to be unbound. Therefore, first, the unbinding request for the plurality of second resources in the plurality of bound resources needs to be received. Based on this, the resource ownership transfer function in the sub-contract on a blockchain is invoked, so that the second owner of the second resource in the sub-contract is changed back to the first object. In this way, a part or all of the plurality of bound resources may be unbound, thereby improving flexibility of resource scheduling or transfer.

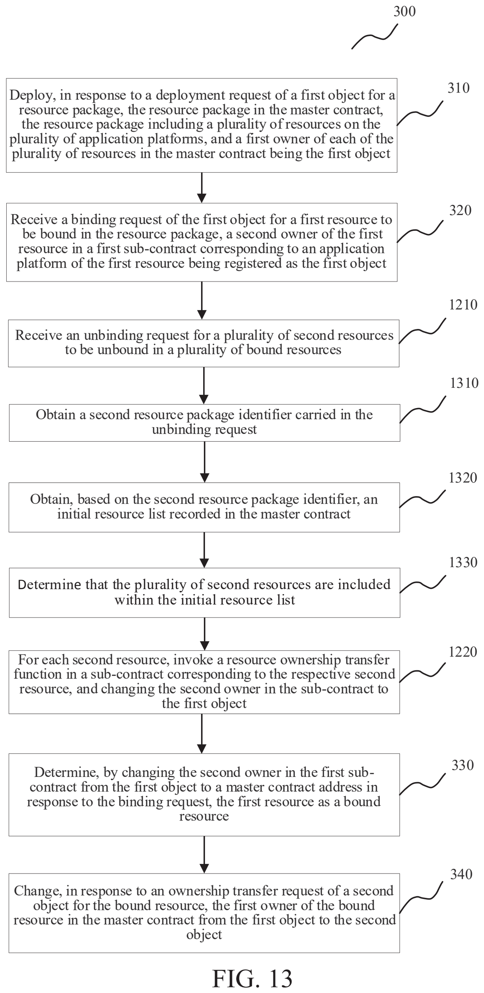

Refer to FIG. 13. Before operation 1220, the method for processing blockchain resources in this application may further include, but is not limited to, the following operation 1310 to operation 1330.

Operation 1310: Obtain a second resource package identifier carried in the unbinding request. A second resource package identifier of a second resource is configured in the unbinding request for a to-be-unbound resource. Based on this, the second resource package identifier carried in the unbinding request is obtained, to determine a search index for searching a corresponding initial resource list.

In some embodiments, before the second resource package identifier carried in the unbinding request is obtained, the method for processing blockchain resources may further include: obtaining a second transmitter of the unbinding request, and determining the second transmitter as a first object.

Because an object delivering the unbinding request, an object delivering the binding request, and an object deploying a resource package may not be the same object, when it is determined that the resource package is deployed by the first object, the second transmitter of the unbinding request may be obtained, the second transmitter is determined as the first object, and then a subsequent operation is performed. In this way, security of the method for processing blockchain resources in this application can be further improved.

Operation 1320: Obtain, based on the second resource package identifier, an initial resource list recorded in the master contract.

In this embodiment of this application, in a process of deploying the resource package, the second resource package identifier, the initial resource list, and a first variable are recorded in the master contract on a blockchain, and a mapping relationship between the second resource package identifier and the initial resource list is recorded in the first variable. Therefore, based on the second resource package identifier, the master contract is searched for the first variable, to obtain the initial resource list matching the second resource package identifier.

Operation 1330: Determine that the plurality of second resources are included within the initial resource list.

Determining that the plurality of to-be-unbound resources are included within the initial resource list means that these to-be-unbound resources may be found in the resource package deployed in the master contract.

According to this embodiment of this application shown in operation 1310 to operation 1330, before a resource ownership transfer function in a sub-contract on the blockchain is invoked, it is first determined that the plurality of to-be-unbound resources are included within the initial resource list, to ensure that the resource needing to be unbound can be found in the master contract. Based on this, a second owner of the to-be-unbound resource in the sub-contract is subsequently changed back to the first object. This helps improve accuracy and efficiency of resource unbinding.

In some embodiments, when the to-be-unbound resource is not included within the initial resource list, corresponding error information may be generated based on this case, and is fed back to the first object.

In some example embodiments, the initial resource list includes information about a plurality of initial resources, and information about each initial resource includes: a first sub-contract address corresponding to an application platform on which the respective initial resource is registered, an identifier of the respective initial resource, and a registered quantity of the initial resource on the application platform. The unbinding request includes information about the plurality of second resources (i.e., to-be-unbound resources), and information about each second resource includes: a third sub-contract address corresponding to an application platform on which the respective second resource is registered and an identifier of the respective second resource.

Operation 1330 may include, but is not limited to: Determine that a second resource is included within the initial resource list when a first sub-contract address corresponding to an initial resource in the initial resource list is equal to a third sub-contract address corresponding to the second resource, and an identifier of the initial resource is equal to an identifier of the second resource.

In this embodiment of this application, in the initial resource list, for each initial resource, the first sub-contract address corresponding to the application platform on which the initial resource is registered and the identifier of the initial resource are recorded; and in the unbinding request, for each second resource, the third sub-contract address corresponding to the application platform on which the second resource is registered and the identifier of the second resource are recorded. In this case, if a first sub-contract address corresponding to an initial resource in the initial resource list is equal to a third sub-contract address corresponding to a second resource, and an identifier of the initial resource is equal to an identifier of the second resource, it means that the second resource is included within the initial resource list. Therefore, the initial resource may be determined as an candidate resource. In the foregoing manner, it is determined that the second resource is included within the initial resource list. This helps improve accuracy and efficiency of resource unbinding.

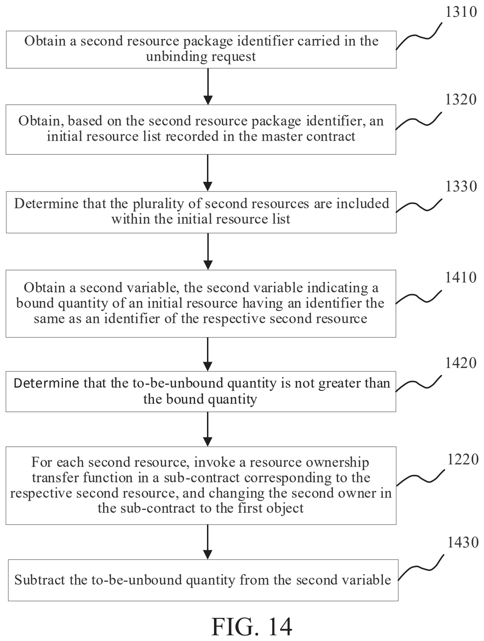

Refer to FIG. 14. An unbinding request further carries a to-be-unbound quantity of each second resource. After operation 1330, for each second resource, the method for processing blockchain resources may further include, but is not limited to, the following operations.

Operation 1410: Obtain a second variable, the second variable indicating a bound quantity of an initial resource having an identifier the same as an identifier of the respective second resource.

Operation 1420: Determine that the to-be-unbound quantity is not greater than the bound quantity.

The bound quantity herein refers to a quantity of binding the initial resource before binding in this round. Therefore, after the second variable is obtained, whether the to-be-unbound quantity is not greater than the second variable, namely, the bound quantity before binding in this round, may be determined based on the bound quantity and the to-be-unbound quantity. If the to-be-unbound quantity is not greater than the second variable, it means that the bound quantity can support an unbinding request for unbinding all or a part of the resources. In this case, it may be determined that the to-be-unbound resource is included within an initial resource list.

Operation 1430: Subtract the to-be-unbound quantity from the second variable.

After a resource ownership transfer function in a sub-contract on a blockchain is invoked to enable a second owner of the to-be-unbound resource in the sub-contract to be changed to a first object, it may be determined that the bound quantity needs to be changed. Therefore, a response to the unbinding request may be completed by subtracting the to-be-unbound quantity from the second variable.

In this way, according to this embodiment of this application shown in operation 1410 to operation 1430, it may be first determined that the to-be-unbound quantity is greater than the bound quantity before the resource ownership transfer function in the sub-contract on the blockchain is invoked to unbind the resource, to reduce occurrence of invalid resource unbinding processes. This helps improve accuracy and efficiency of resource unbinding.

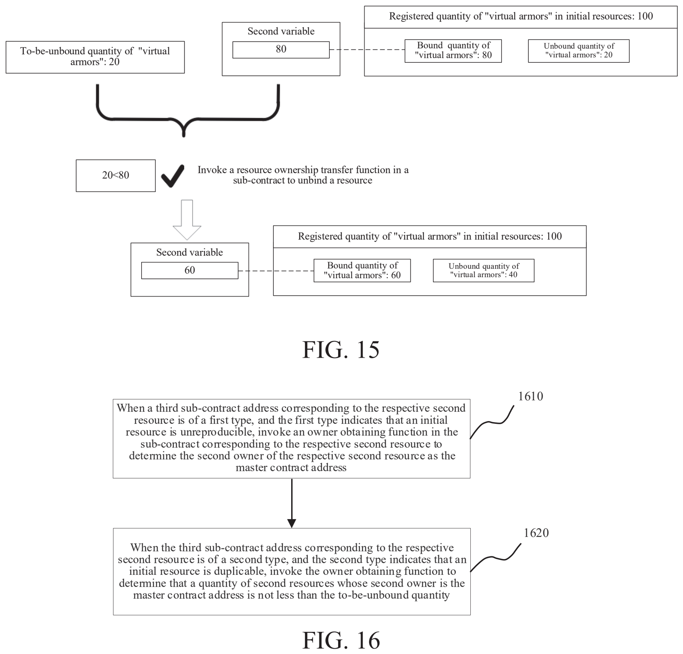

FIG. 15 shows an embodiment of unbinding a resource after determining that a to-be-unbound resource is included within an initial resource list. In FIG. 15, unbinding needs to be performed for 80 bound "virtual armors" to unbind 20 "virtual armors" from the "virtual armors". In view of this, a second variable needs to be first obtained, and the second variable indicates a bound quantity 80.

Then, it is determined that a to-be-unbound quantity 20 of virtual armors is less than the second variable 80.

Further, a resource ownership transfer function in a sub-contract on a blockchain is invoked, so that a second owner of the to-be-unbound resource in the sub-contract is changed to a first object.

Further, the to-be-unbound quantity 20 of virtual armors is subtracted from the second variable 80.

In this way, it may be first determined that a to-be-unbound quantity is greater than a bound quantity before the resource ownership transfer function in the sub-contract on the blockchain is invoked to unbind the resource, to reduce occurrence of invalid resource unbinding processes. This helps improve accuracy and efficiency of resource unbinding.

Refer to FIG. 16. An unbinding request further carries a to-be-unbound quantity of each second resource. After operation 1330, for each second resource, the method for processing blockchain resources may further include, but is not limited to, the following operation 1610 and operation 1620.

Operation 1610: When a third sub-contract address corresponding to the respective second resource is of a first type, and the first type indicates that an initial resource is unreproducible, invoke an owner obtaining function in the sub-contract corresponding to the respective second resource to determine the second owner of the respective second resource as the master contract address.

The first type indicates that the initial resource is unreproducible, which means that a bound quantity of the initial resource of the first type is limited to 1 or 0. In this case, the owner obtaining function in the sub-contract on a blockchain may be invoked, to determine the second owner of the to-be-unbound resource in the sub-contract as the master contract address.

Further, the second owner of the to-be-unbound resource is changed back to a first object, so that the resource can be unbound.

Operation 1620: When the third sub-contract address corresponding to the respective second resource is of a second type, and the second type indicates that an initial resource is duplicable, invoke the owner obtaining function to determine that a quantity of second resources whose second owner is the master contract address is not less than the to-be-unbound quantity.

The second type indicates that the initial resource is duplicable, which means that a bound quantity of the initial resource of the second type is not limited to 1. In this case, the owner obtaining function in the sub-contract on the blockchain needs to be invoked, to determine that the quantity of resources that are on the application platforms corresponding to sub-contracts and whose second owners are the master contract address is not less than the to-be-unbound quantity.

Further, the second owners of the to-be-unbound quantity of resources are changed back to the first object, so that the resources can be unbound.

According to this embodiment of this application shown in operation 1610 and operation 1620, based on the type of the third sub-contract address, the second owners of the to-be-unbound quantity of resources are changed to the first object. In this way, differences between data protocol standards of different application platforms can be flexibly dealt with. Even if a part of a plurality of application platforms that store virtual resources are of the first type and a part of the application platforms are of the second type, and it is difficult to integrate the virtual resources stored in these different platforms, according to this embodiment of this application shown in operation 1610 and operation 1620, the second owners of the to-be-unbound quantity of resources may be changed back to the first object based on the type of the third sub-contract address, to implement unbinding of the resources on the different application platforms at one time. In this way, it is unnecessary to perform complex changes on the application platforms. This improves resource transfer and scheduling efficiency and interoperability across the application platforms.

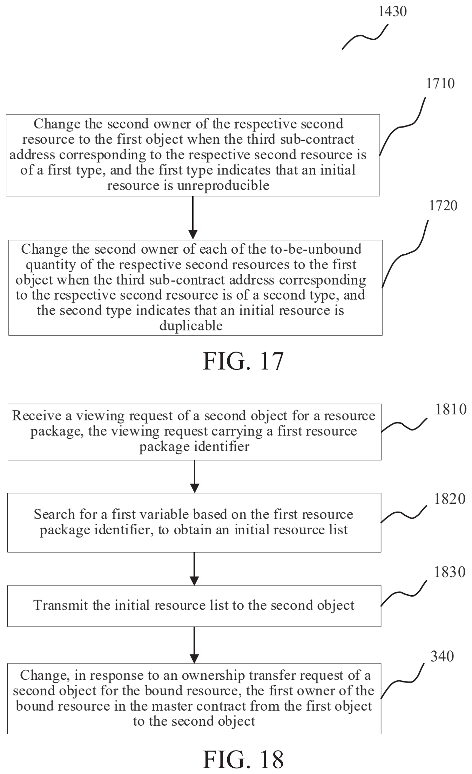

Refer to FIG. 17. In operation 1430, invoking the ownership transfer function in the sub-contract corresponding to the to-be-unbound resource to change the second owner in the sub-contract to the first object may include, but is not limited to, the following operation 1710 and operation 1720.

Operation 1710: Change the second owner of the respective second resource to the first object when the third sub-contract address corresponding to the respective second resource is of a first type, and the first type indicates that an initial resource is unreproducible.

The first type indicates that the initial resource is unreproducible, which means that a quantity of the initial resource of the first type is limited to 1 or 0. When it is determined that the third sub-contract address corresponding to the to-be-unbound resource is of the first type, the second owner of the to-be-unbound resource is changed to an address of a master contract, so that the resource can be unbound.

Operation 1720: Change the second owner of each of the to-be-unbound quantity of the respective second resources to the first object when the third sub-contract address corresponding to the respective second resource is of a second type, and the second type indicates that an initial resource is duplicable.

The second type indicates that the initial resource is duplicable, which means that a quantity of the initial resource of the second type is not limited to 1. When it is determined that the third sub-contract address corresponding to the to-be-unbound resource is of the second type, the second owners of the to-be-unbound quantity of resources need to be changed to the first object.

In this way, according to this embodiment of this application shown in operation 1710 and operation 1720, the second owners of the to-be-unbound quantity of resources may be changed from the master contract address back to the first object, to unbind the resources. This reflects flexibility of master scheduling or transfer of information about the resources.

Refer to FIG. 18. Before operation 340, the method for processing blockchain resources may further include, but is not limited to, the following operation 1810 and operation 1820.

Operation 1810: Receive a viewing request of a second object for a resource package, the viewing request carrying a first resource package identifier.

Operation 1820: Search for a first variable based on the first resource package identifier, to obtain an initial resource list.

Operation 1830: Transmit the initial resource list to the second object.

Before a first owner of a bound resource is changed to the second object in response to a resource ownership transfer request of the second object, the second object needs to confirm ownership of a resource corresponding to the resource ownership transfer request. Therefore, this embodiment of this application provides implementations shown in operation 1810 to operation 1830, to achieve the effect.

In operation 1810, a first resource package identifier of a to-be-viewed resource is configured in the viewing request for the resource package. Based on this, the resource package identifier of the viewing request needs to be obtained, to determine a search index for searching for a corresponding initial resource list.

In some embodiments, before the first resource package identifier of the viewing request is obtained, the method for processing blockchain resources may further include: obtaining a third transmitter of the viewing request, and determining the third transmitter as the second object. Because an object delivering the viewing request and a target object transferring the resource package may not be the same object, when the second object is determined as the target object transferring the resource, the third transmitter of the viewing request may be obtained, the third transmitter is determined as the second object, and then a subsequent operation is performed. In this way, security of the method for processing blockchain resources in this application can be further improved.

In operation 1820, in a process of deploying the resource package, the resource package identifier, the initial resource list, and the first variable are recorded in a master contract on a blockchain, and a mapping relationship between the resource package identifier and the initial resource list is recorded in the first variable. Therefore, based on the resource package identifier, the master contract is searched for the first variable, to obtain the initial resource list matching the resource package identifier.

In operation 1830, a plurality of to-be-viewed resources may be found in the initial resource list of the resource package in the master contract. This means that resources needing to be viewed by the second object are integrated by the first object into the resource package and deployed in the master contract. Based on this, the plurality of to-be-viewed resources needing to be viewed are included within the initial resource list. Therefore, the initial resource list may be transmit to the second object, so that the second object confirms the ownership of the resource corresponding to the resource ownership transfer request. In this way, security of the method for processing blockchain resources in this application can be further improved.

According to an aspect of this application, an apparatus for processing blockchain resources 1900 is provided. The apparatus for processing blockchain resources 1900 corresponds to a blockchain node. The blockchain node is connected to a plurality of application platforms, and maintains, on a blockchain, a sub-contract configured for each application platform and a master contract configured for the plurality of application platform. The apparatus 1900 includes:
a resource deployment unit 1910, configured to deploy, in response to a deployment request of a first object for a resource package, the resource package in the master contract, the resource package comprising a plurality of resources on the plurality of application platforms, and a first owner of each of the plurality of resources in the master contract being the first object;
a first receiving unit 1920, configured to receive a binding request of the first object for a first resource to be bound in the resource package, a second owner of the first resource in a first sub-contract corresponding to an application platform of the first resource being registered as the first object;
a resource binding unit 1930, configured to determine, by changing the second owner in the first sub-contract from the first object to a master contract address in response to the binding request, the first resource as a bound resource; and
a first change execution unit 1940, configured to change, in response to an ownership transfer request of a second object for the bound resource, the first owner of the bound resource in the master contract from the first object to the second object.

In some embodiments, the resource deployment unit 1910 is specifically configured to:
allocate a first resource package identifier to the resource package in response to the deployment request;
receive an initial resource list of the resource package;
record a mapping relationship between the first resource package identifier and the initial resource list in a first variable; and
record the first resource package identifier, the initial resource list, and the first variable in the master contract.

In some embodiments, the apparatus for processing blockchain resources 1900 further includes:
a first obtaining unit (not shown), configured to obtain the first resource package identifier carried in the binding request, before changing the second owner from the first object to the master contract address in response to the binding request;
a first searching unit (not shown), configured to search the first variable based on the first resource package identifier, to obtain the initial resource list; and
a first determining unit (not shown), configured to determine that the first resource is included within the initial resource list.

In some embodiments, the initial resource list includes information about a plurality of initial resources, and information about each initial resource includes: a first sub-contract address corresponding to an application platform on which the respective initial resource is registered, an identifier of the respective initial resource, and a registered quantity of the respective initial resource on the application platform.

The binding request includes information about the plurality of first resources, and information about each first resource includes: a second sub-contract address corresponding to an application platform on which the respective first resource is registered, an identifier of the respective first resource, and a to-be-bound quantity of the respective first resource.

The first determining unit is specifically configured to:
determine an initial resource in the initial resource list as a candidate resource when a first sub-contract address corresponding to the initial resource is equal to a second sub-contract address corresponding to a first resource, and an identifier of the initial resource is equal to an identifier of the first resource; and
determine, based on the registered quantity of the candidate resource and the to-be-bound quantity of the first resource, that the first resource is included within the initial resource list.

In some embodiments, the first determining unit is specifically configured to:
obtain a second variable, the second variable indicating a bound quantity within the registered quantity; and
when a sum of the bound quantity and the to-be-bound quantity is not greater than the registered quantity, determine that the first resource is included within the initial resource list, and adding the to-be-bound quantity to the second variable.

In some embodiments, the apparatus 1900 further includes:
a second determining unit (not shown), configured to determine that the first sub-contract address corresponding to the initial resource is of a first type after obtaining the initial resource list, the first type indicating that the initial resource is unreproducible; and
a first verification unit (not shown), configured to verify that the registered quantity of the initial resource is 1.

In some embodiments, the resource binding unit 1930 is specifically configured to:
for each first resource,
change the second owner of the first resource to the master contract address, when the second sub-contract address corresponding to the first resource is of a first type, the first type indicating that the initial resource is unreproducible; and
change the second owner of each of the to-be-bound quantity of first resources to the master contract address, when the second sub-contract address corresponding to the first resource is of a second type, the second type indicating that the initial resource is duplicable.

In some embodiments, the apparatus for processing blockchain resources 1900 further includes:
a second obtaining unit (not shown), configured to obtain a first transmitter of the binding request before the first resource package identifier carried in the binding request is obtained; and
a third determining unit (not shown), configured to determine the first transmitter as the first object.

In some embodiments, the apparatus 1900 further includes:
a second receiving unit (not shown), configured to receive an unbinding request for a plurality of second resources to be unbound in a plurality of bound resources; and
a second change execution unit (not shown), configured to: for each second resource, invoke a resource ownership transfer function in a sub-contract corresponding to the respective second resource, and changing the second owner in the sub-contract to the first object.
In some embodiments, the apparatus 1900 further includes:
   a third obtaining unit (not shown), configured to obtain a second resource package identifier carried in the unbinding request before the changing the second owner in the sub-contract to the first object;
   a first searching unit (not shown), configured to obtain, based on the second resource package identifier, an initial resource list recorded in the master contract; and
   a fourth determining unit (not shown), configured to determine that the plurality of second resources are included within the initial resource list.

In some embodiments, the initial resource list includes the information about the plurality of initial resources, and the information about each initial resource includes: a first sub-contract address corresponding to an application platform on which the respective initial resource is registered, an identifier of the respective initial resource, and a registered quantity of the initial resource on the application platform.

The unbinding request includes information about the plurality of to-be-unbound resources, and information about each to-be-unbound resource includes: a third sub-contract address corresponding to an application platform on which the respective second resource is registered and an identifier of the respective second resource.

The fourth determining unit (not shown) is specifically configured to:
determine that a second resource is included within the initial resource list when a first sub-contract address corresponding to an initial resource in the initial resource list is equal to a third sub-contract address corresponding to the second resource, and an identifier of the initial resource is equal to an identifier of the second resource.

In some embodiments, the unbinding request further carries a to-be-unbound quantity of each second resource.

The apparatus 1900 further includes:
a fourth obtaining unit, configured to obtain a second variable, the second variable indicating a bound quantity of an initial resource having an identifier the same as an identifier of the respective second resource;
a fifth determining unit (not shown), configured to determine that the to-be-unbound quantity is not greater than the bound quantity; and
a resource unbinding unit (not shown), configured to subtract the to-be-unbound quantity from the second variable.

In some embodiments, the unbinding request further carries a to-be-unbound quantity of each second resource; and
for each second resource, the apparatus 1900 further includes:
an owner address determining unit (not shown), configured to:
when the third sub-contract address corresponding to the respective second resource is of a first type, and the first type indicates that an initial resource is unreproducible, invoke an owner obtaining function in the sub-contract corresponding to the respective second resource to determine the second owner of the respective second resource as the master contract address; and
an owner quantity determining unit (not shown), configured to: when the third sub-contract address corresponding to the respective second resource is of a second type, and the second type indicates that an initial resource is duplicable, invoke the owner obtaining function to determine that a quantity of second resources whose second owner is the master contract address is not less than the to-be-unbound quantity.

In some embodiments, the apparatus 1900 further includes:
a fifth obtaining unit (not shown), configured to obtain a second transmitter of the unbinding request before the obtaining a second resource package identifier carried in the unbinding request; and
a sixth determining unit (not shown), configured to determine the second transmitter as the first object.

In some embodiments, the unbinding request further carries a to-be-unbound quantity of each second resource; and
the resource unbinding unit (not shown) is specifically configured to:
change the second owner of the respective second resource to the first object when the third sub-contract address corresponding to the respective second resource is of a first type, and the first type indicates that an initial resource is unreproducible; and
change the second owner of each of the to-be-unbound quantity of the respective second resources to the first object when the third sub-contract address corresponding to the respective second resource is of a second type, and the second type indicates that an initial resource is duplicable.

In some embodiments, the apparatus 1900 further includes:
an authorization function invoking unit (not shown), configured to invoke authorization functions in a plurality of sub-contracts; and
an authorization function execution unit (not shown), configured to execute the authorization functions to authorize the master contract to access the sub-contracts, so that the master contract address can serve as the second owner registered on the application platforms corresponding to the sub-contracts.

In some embodiments, the apparatus 1900 further includes:
a third receiving unit (not shown), configured to receive a viewing request of the second object for the resource package before the changing the first owner of the bound resource in the master contract from the first object to the second object, the viewing request carrying the first resource package identifier;
a second searching unit (not shown), configured to search the first variable based on the resource package identifier, to obtain the initial resource list; and
a list transmitting unit (not shown), configured to transmit the initial resource list to the second object.

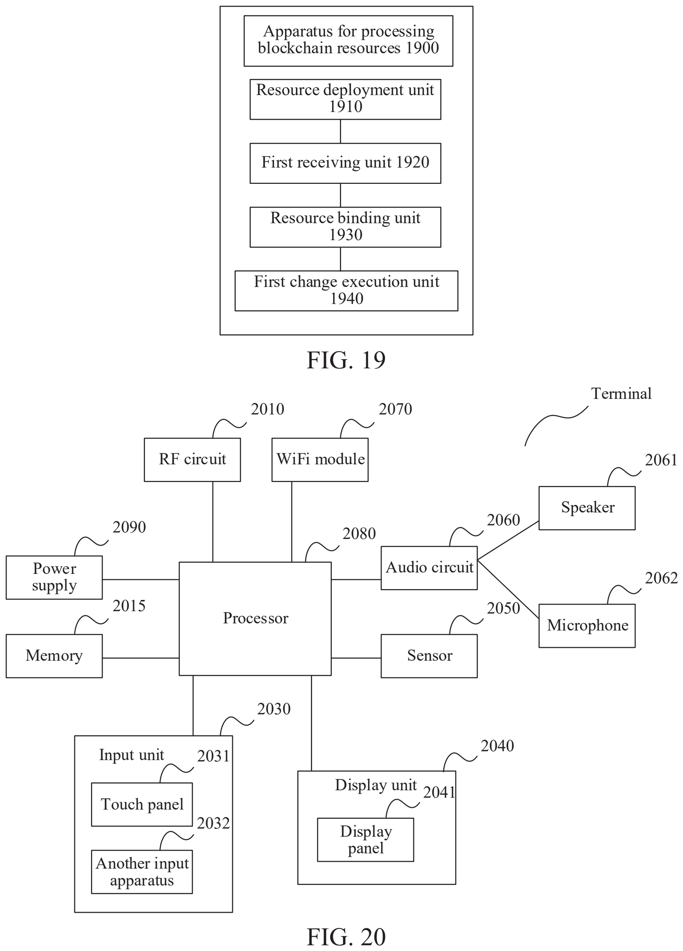

Refer to FIG. 20. FIG. 20 is a block diagram of a partial structure of a terminal that implements a method for processing blockchain resources according to an embodiment of this application. The terminal includes components such as a radio frequency (RF) circuit 2010, a memory 2015, an input unit 2030, a display unit 2040, a sensor 2050, an audio circuit 2060, a wireless fidelity (WiFi) module 2070, a processor 2080, and a power supply 2090. A person skilled in the art may understand that the structure of the terminal shown in FIG. 20 does not constitute a limitation on a mobile phone or a computer, and the terminal may include more components or fewer components than those shown in the figure, or some of the components may be combined, or a different component deployment may be used.

The RF circuit 2010 may be configured to receive and send a signal in an information receiving and sending process or a conversation process. Specifically, the RF circuit 2010 receives downlink information from a base station, then delivers the downlink information to the processor 2080 for processing, and sends related uplink data to the base station.

The memory 2015 may be configured to store a software program and module. The processor 2080 runs the software program and module stored in the memory 2015, to implement various functional applications and data processing of the object terminal.

The input unit 2030 may be configured to: receive inputted digit or character information, and generate a keyboard signal input related to settings and function control of the object terminal. Specifically, the input unit 2030 may include a touch panel 2031 and another input apparatus 2032.

The display unit 2040 may be configured to display inputted or provided information and various menus of the object terminal. The display unit 2040 may include a display panel 2041.

The audio circuit 2060, a speaker 2061, and a microphone 2062 may provide audio interfaces.

In this embodiment, the processor 2080 included in the terminal may perform the method for processing blockchain resources in the foregoing embodiments.

The terminal in the embodiments of this application may include, but not limited to, a mobile phone, a computer, a smart voice interaction device, a smart home appliance, an in-vehicle terminal, an aircraft, and the like. The embodiments of this application can be applied to various fields, including, but not limited to, a consortium blockchain, structured information processing, security technologies, data security, data storage, information technologies, and the like.

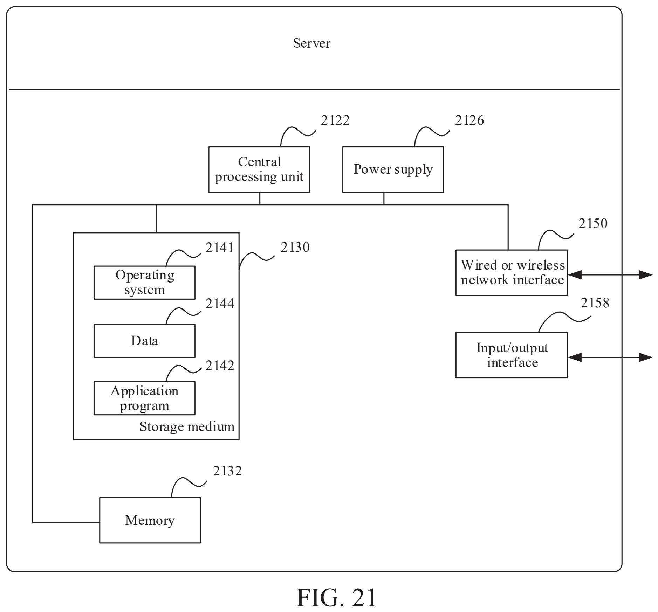

FIG. 21 is a diagram of a partial structure of a server that implements a method for processing blockchain resources according to an embodiment of this application. The server may vary significantly due to different configuration or performance, and may include one or more central processing units (CPUs) 2122 (for example, one or more processors), a memory 2132, and one or more storage media 2130 (for example, one or more mass storage apparatuses) for storing an application program 2142 or data 2144. The memory 2132 and the storage medium 2130 may be transient or persistent storages. The program stored in the storage medium 2130 may include one or more modules (not marked in the figure), and each module may include a series of instruction operations for the server. Further, the central processing unit 2122 may be configured to communicate with the storage medium 2130, and perform, on the server, the series of instruction operations in the storage medium 2130.

The server may further include one or more power supplies 2126, one or more wired or wireless network interfaces 2150, one or more input/output interfaces 2158, and/or one or more operation systems 2141, for example, Windows ServerTM, Mac OS XTM, UnixTM, LinuxTM, and FreeBSDTM.

The central processing unit 2122 included in the server may be configured to perform the method for processing blockchain resources in the embodiments of this application.

An embodiment of this application further provides a computer-readable storage medium, configured to store program code. The program code is configured for performing the method for processing blockchain resources in the foregoing embodiments.

An embodiment of this application further provides a computer program product, including a computer program. A processor of a computer device reads and executes the computer program, to enable the computer device to perform the foregoing method for processing blockchain resources.

In the specification and accompanying drawings of this application, the terms "first", "second", "third", "fourth", and so on (if existent) are intended to distinguish between similar objects but do not necessarily indicate a specific order or sequence. Data used in this way is exchangeable in a proper case, so that the embodiments of this application described herein can be implemented in an order different from the order shown or described herein. In addition, the terms "include" and "have" and any other variants are intended to cover the non-exclusive inclusion. For example, a process, method, system, product, or apparatus that includes a list of operations or units is not necessarily limited to those expressly listed operations or units, but may include other operations or units not expressly listed or inherent to such a process, method, product, or apparatus.

In this application, "at least one" refers to one or more, and "a plurality of" refers to two or more. The term "and/or" is configured for describing an association between associated objects and representing that three associations may exist. For example, "A and/or B" may indicate three cases: Only A exists, only B exists, and both A and B exist, and A and B may be singular or plural. The character "/" generally indicates an "or" relationship between the associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", and a, b, and c may be singular or plural.

In the descriptions of the embodiments of this application, "a plurality of (or multiple)" means two or more; "greater than", "less than", "exceed", and the like are understood as excluding a number itself; and "above", "below", "within", and the like are understood as including a number itself.

In the several embodiments provided in this application, the disclosed system, apparatus, and method may be implemented in other manners. For example, the described apparatus embodiments are merely schematic. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and components displayed as units may or may not be physical units, that is, may be located in one position, or may be distributed on a plurality of network units. A part or all of the units may be selected based on actual needs to achieve the objectives of the solutions of the embodiments.

In addition, the functional units in the embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the related technology, or all or a part of the technical solutions may be implemented in a form of a software product. The computer software product is stored in a storage medium and includes several instructions for indicating a computer apparatus (which may be a personal computer, a server, or a network apparatus) to perform all or a part of the operations of the methods described in the embodiments of this application. The foregoing storage medium includes: any medium that can store program code, such as a USB flash disk, a removable hard disk, a read-only memory (ROM), a random access memory (RAM), a magnetic disk, or an optical disc.

The implementations provided in the embodiments of this application may also be randomly combined to achieve different technical effects.

The foregoing is specific descriptions of the implementations of this application, but this application is not limited to the foregoing implementations. A person skilled in the art may make various equivalent variations or replacements without departing from the spirit of this application.

## Claims

1. A method for processing blockchain resources, executable by an electronic device, the electronic device being connected to a plurality of application platforms, and maintaining, on a blockchain, a sub-contract configured for each of the plurality of application platforms and a master contract configured for the plurality of application platforms; and the method comprising:
deploying, in response to a deployment request of a first object for a resource package, the resource package in the master contract, the resource package comprising a plurality of resources on the plurality of application platforms, and a first owner of each of the plurality of resources in the master contract being the first object;
receiving a binding request of the first object for a first resource to be bound in the resource package, a second owner of the first resource in a first sub-contract corresponding to an application platform of the first resource being registered as the first object;
determining, by changing the second owner in the first sub-contract from the first object to a master contract address in response to the binding request, the first resource as a bound resource; and
changing, in response to an ownership transfer request of a second object for the bound resource, the first owner of the bound resource in the master contract from the first object to the second object.

2. The method according to claim 1, wherein the deploying, in response to a deployment request of a first object for a resource package, the resource package in the master contract comprises:
allocating a first resource package identifier to the resource package in response to the deployment request;
receiving an initial resource list of the resource package;
recording a mapping relationship between the first resource package identifier and the initial resource list in a first variable; and
recording the first resource package identifier, the initial resource list, and the first variable in the master contract.

3. The method according to claim 2, further comprising:
obtaining the first resource package identifier carried in the binding request, before changing the second owner from the first object to the master contract address in response to the binding request;
searching the first variable based on the first resource package identifier, to obtain the initial resource list; and
determining that the first resource is included within the initial resource list.

4. The method according to claim 3, wherein the initial resource list comprises: information about a plurality of initial resources, and information about each initial resource comprises: a first sub-contract address corresponding to an application platform on which the respective initial resource is registered, an identifier of the respective initial resource, and a registered quantity of the respective initial resource on the application platform;
the binding request comprises: information about the plurality of first resources, and information about each first resource comprises: a second sub-contract address corresponding to an application platform on which the respective first resource is registered, an identifier of the respective first resource, and a to-be-bound quantity of the respective first resource; and
the determining that the first resource is included within the initial resource list comprises:
determining an initial resource in the initial resource list as a candidate resource when a first sub-contract address corresponding to the initial resource is equal to a second sub-contract address corresponding to a first resource, and an identifier of the initial resource is equal to an identifier of the first resource; and
determining, based on the registered quantity of the candidate resource and the to-be-bound quantity of the first resource, that the first resource is included within the initial resource list.

5. The method according to claim 4, wherein the determining, based on the registered quantity of the candidate resource and the to-be-bound quantity of the first resource, that the first resource is included within the initial resource list comprises:
obtaining a second variable, the second variable indicating a bound quantity within the registered quantity; and
when a sum of the bound quantity and the to-be-bound quantity is not greater than the registered quantity, determining that the first resource is included within the initial resource list, and adding the to-be-bound quantity to the second variable.

6. The method according to claim 4, further comprising:
determining that the first sub-contract address corresponding to the initial resource is of a first type after obtaining the initial resource list, the first type indicating that the initial resource is unreproducible; and
verifying that the registered quantity of the initial resource is 1.

7. The method according to claim 4, wherein the changing the second owner in the first sub-contract from the first object to a master contract address in response to the binding request comprises:
changing the second owner of the first resource to the master contract address, when the second sub-contract address corresponding to the first resource is of a first type, the first type indicating that the initial resource is unreproducible; and
changing the second owner of each of the to-be-bound quantity of first resources to the master contract address, when the second sub-contract address corresponding to the first resource is of a second type, the second type indicating that the initial resource is duplicable.

8. The method according to claim 3, further comprising:
before the obtaining the first resource package identifier carried in the binding request, obtaining a first transmitter of the binding request, and determining the first transmitter as the first object.

9. The method according to any one of claims 1 to 8, further comprising:
receiving an unbinding request for a plurality of second resources to be unbound in a plurality of bound resources; and
for each second resource, invoking a resource ownership transfer function in a sub-contract corresponding to the respective second resource, and changing the second owner in the sub-contract to the first object.

10. The method according to claim 9, further comprising:
obtaining a second resource package identifier carried in the unbinding request before the changing the second owner in the sub-contract to the first object;
obtaining, based on the second resource package identifier, an initial resource list recorded in the master contract; and
determining that the plurality of second resources are included within the initial resource list.

11. The method according to claim 10, wherein the initial resource list comprises: information about a plurality of initial resources, and information about each initial resource comprises: a first sub-contract address corresponding to an application platform on which the respective initial resource is registered, an identifier of the respective initial resource, and a registered quantity of the initial resource on the application platform;
the unbinding request comprises: information about the plurality of second resources, and information about each second resource comprises: a third sub-contract address corresponding to an application platform on which the respective second resource is registered and an identifier of the respective second resource; and
the determining that the plurality of second resources are included within the initial resource list comprises:
determining that a second resource is included within the initial resource list when a first sub-contract address corresponding to an initial resource in the initial resource list is equal to a third sub-contract address corresponding to the second resource, and an identifier of the initial resource is equal to an identifier of the second resource.

12. The method according to claim 10, wherein the unbinding request further carries a to-be-unbound quantity of each second resource; and
the method further comprises:
for each second resource,
obtaining a second variable, the second variable indicating a bound quantity of an initial resource having an identifier the same as an identifier of the respective second resource;
determining that the to-be-unbound quantity is not greater than the bound quantity; and
subtracting the to-be-unbound quantity from the second variable.

13. The method according to claim 11, wherein the unbinding request further carries a to-be-unbound quantity of each second resource; and
the method further comprises:
for each second resource,
when the third sub-contract address corresponding to the respective second resource is of a first type, and the first type indicates that an initial resource is unreproducible, invoking an owner obtaining function in the sub-contract corresponding to the respective second resource to determine the second owner of the respective second resource as the master contract address; and
when the third sub-contract address corresponding to the respective second resource is of a second type, and the second type indicates that an initial resource is duplicable, invoking the owner obtaining function to determine that a quantity of second resources whose second owner is the master contract address is not less than the to-be-unbound quantity.

14. The method according to claim 10, further comprising:
obtaining a second transmitter of the unbinding request before the obtaining a second resource package identifier carried in the unbinding request; and
determining the second transmitter as the first object.

15. The method according to claim 11, wherein the unbinding request further carries a to-be-unbound quantity of each second resource; and
the invoking a resource ownership transfer function in a sub-contract corresponding to the respective second resource, and changing the second owner in the sub-contract to the first object comprises:
changing the second owner of the respective second resource to the first object when the third sub-contract address corresponding to the respective second resource is of a first type, and the first type indicates that an initial resource is unreproducible; and
changing the second owner of each of the to-be-unbound quantity of the respective second resources to the first object when the third sub-contract address corresponding to the respective second resource is of a second type, and the second type indicates that an initial resource is duplicable.

16. The method according to claim 2, further comprising:
receiving a viewing request of the second object for the resource package before the changing the first owner of the bound resource in the master contract from the first object to the second object, the viewing request carrying the first resource package identifier;
searching the first variable based on the first resource package identifier, to obtain the initial resource list; and
transmitting the initial resource list to the second object.

17. An apparatus for processing blockchain resources, the apparatus being connected to a plurality of application platforms, and maintaining, on a blockchain, a sub-contract configured for each of the plurality of application platforms and a master contract configured for the plurality of application platforms; and the apparatus comprising:
a resource deployment unit, configured to deploy, in response to a deployment request of a first object for a resource package, the resource package in the master contract, the resource package comprising a plurality of resources on the plurality of application platforms, and a first owner of each of the plurality of resources in the master contract being the first object;
a first receiving unit, configured to receive a binding request of the first object for a first resource to be bound in the resource package, a second owner of the first resource in a first sub-contract corresponding to an application platform of the first resource being registered as the first object;
a resource binding unit, configured to determine, by changing the second owner in the first sub-contract from the first object to a master contract address in response to the binding request, the first resource as a bound resource; and
a first change execution unit, configured to change, in response to an ownership transfer request of a second object for the bound resource, the first owner of the bound resource in the master contract from the first object to the second object.

18. An electronic device, comprising a memory and a processor, the memory having a computer program stored therein, and the processor, when executing the computer program, implementing the method for processing blockchain resources according to any one of claims 1 to 16.

19. A computer-readable storage medium, having a computer program stored therein, and the computer program, when executed by a processor, implementing the method for processing blockchain resources according to any one of claims 1 to 16.

20. A computer program product, comprising a computer program, and the computer program being read and executed by a processor of a computer device, to enable the computer device to perform the method for processing blockchain resources according to any one of claims 1 to 16.
